# DEMANDE DE BREVET EUROPEEN

(11) **EP 3 315 296 A1**
(43) Date de publication de la demande: **02.05.2018**
(21) Numéro de dépôt: 17181989.9
(22) Date de dépôt: 18.07.2017
(51) Int. Cl.: B29C 70/52

(54) **PROCÉDÉ PERFECTIONNÉ D'OBTENTION D'UNE PIÈCE PROFILÉE COURBE EN MATIÈRE COMPOSITE THERMOPLASTIQUE ET INSTALLATION DE MISE EN UVRE DE CE PROCÉDÉ**

(30) Priorité: 18.07.2016 FR 1656842
(71) Demandeur: CQFD Composites, 68270 Wittenheim (FR)
(72) Inventeur: Chauzu, Frank, 68170 RIXHEIM (FR)
(74) Mandataire: Brungard, Yves Francois

(57) **Abrégé**

Un procédé de pultrusion et une installation permettent d'obtenir une pièce profilée (7) en matériau composite thermoplastique, avec les étapes consistant à :
▷ préparer un matériau composite intermédiaire (7a) comprenant un matériau de renfort fibreux et une matrice;
▷ faire passer le matériau intermédiaire (7a) dans une unité de calibrage (6) et le calibrer tout en guidant la pièce profilée en aval de l'unité de calibrage de manière à lui conférer une forme courbe dans l'unité de calibrage (6) pour qu'elle durcisse avec cette courbure imposée.

## Description

### DOMAINE DE L'INVENTION

La présente invention concerne un procédé d'obtention d'une pièce profilée courbe en matière composite thermoplastique et une installation de mise en oeuvre de ce procédé. Elle concerne en particulier un procédé de pultrusion.

### ART ANTÉRIEUR

Pour la fabrication de profilés en matériaux composites, une technique connue de pultrusion est largement utilisée. Elle permet en effet d'obtenir des profilés de sections constantes aux propriétés mécaniques élevées et de surcroît présentant un bon rapport performance/poids par rapport aux matériaux traditionnels. Il s'agit en pultrusion de tirer d'une façon continue ou semi-continue un faisceau de fibres unidirectionnelles et/ou multidirectionnelles au travers d'une filière permettant d'imprégner lesdites fibres d'une résine polymérisable et de polymériser la résine dans la filière pour former un profilé composite en sortie de ladite filière, avec une matrice incorporant les fibres. Cette technique est généralement mise en oeuvre avec des résines thermodurcissables. Le profilé est complètement formé à sa sortie de la filière et parfaitement droit. Dans le cas des résines thermodurcissable, la forme du profilé n'est par ailleurs pas modifiable après sa sortie de la filière. Cette technique nécessite de prévoir un outillage complet pour chaque section de profilé que l'on souhaite fabriquer, depuis la zone d'imprégnation jusqu'à la sortie de la filière après la polymérisation.

Le faisceau de fibres est typiquement une mèche composée d'une multitude de fibres, par exemple de fibres de verre, placées côte-à-côte sans entrecroisement. Un tel faisceau est aussi appelé stratifil dans le cas du verre ou désigné par le terme anglais « roving ». Dans la suite du document, on utilisera le terme de mèche.

Une autre approche consiste à imprégner un faisceau de fibres à partir d'une matrice fondue. Cette approche est confrontée au problème de viscosité des polymères fondus et sa qualité de mise en oeuvre dépend fortement du taux et du type de fibres de renforts utilisées. Il sera plus facile d'imprégner quelques fibres métalliques (généralement quelques centaines de microns de diamètre) qu'un taux volume de 50% de fibres de carbone (diamètre de 5 à 7 micromètres).

Certaines résines thermoplastiques peuvent se travailler à la manière d'une résine thermodurcissable, c'est-à-dire par voie réactive. La polymérisation des monomères thermoplastiques a lieu alors in situ dans l'outillage de pultrusion. Dans ce cas et comme pour les thermodurcissables, le profilé sort généralement selon la forme finale de la filière de pultrusion qui, dans son long qui s'étend généralement sur 700 à 1000 mm, intègre une zone d'imprégnation suivie de la zone de polymérisation ayant la forme du profilé souhaité de sorte que le profilé sort dans sa forme finale, généralement à l'état solide c'est-à-dire à une température en dessous du point de fusion de la matrice qui le compose. Ici aussi, la filière et le profilé sont droits.

L'avantage de cette technologie réside dans l'utilisation de précurseurs tels que des monomères de très faible viscosité, ce qui conduit à pouvoir utiliser des taux de renfort très importants tout en ayant une excellente et très homogène imprégnation des fibres. Les systèmes réactifs existant pour la pultrusion sont principalement basés sur des mécanismes de polymérisation anionique de monomères comme pour le polyamide 6, à partir d'ε-caprolactame, le polyamide 12, à partir de lauryllactame, ou des polymérisations radicalaires comme avec le PMMA, à partir de méthacrylate de méthyle. Dans la suite du document, on appellera résine le mélange des précurseurs qui formera le polymère et la matrice après la réaction de polymérisation.

Dans certaines utilisations, il est souhaitable d'obtenir des profilés courbes.

Par exemple, le document US 2015/0129116 A1 propose de fabriquer un pare-choc de véhicule comportant un renfort en matériau composite, avec des fibres enrobées d'une matrice thermoplastique. Le renfort est un profilé de section constante et s'étendant en courbe constante.

Dans l'une des techniques envisagées pour la production d'un tel renfort, une filière dans laquelle passe un faisceau de fibres imprégnés par une résine thermoplastique a une forme courbe correspondant à la courbure du profilé à réaliser. Ainsi, la polymérisation de la résine a lieu dans la filière alors que l'ensemble des composants sont déjà conformés dans la forme finale du profilé. Dans une autre technique, le profilé est produit par pultrusion en étant droit, puis est cintré dans un outillage, par une opération d'emboutissage, par exemple.

Un autre exemple de procédé de pultrusion est montré par le document WO 2008/116560 A1, pour fabriquer un profilé courbe en matière thermodurcissable. Une filière a une courbure correspondant à celle du profilé à fabriquer. L'avancement des composants dans la filière est réalisé par pas. Dans un premier temps, la partie formée du profilé est maintenue fixe au niveau de la sortie de la filière et la filière subit un pivotement dans le sens inverse du mouvement du profilé centrée sur le centre de la courbure. Une nouvelle portion des fibres progresse ainsi à l'intérieur de la filière tandis qu'une partie du profilé en ressort. Puis la filière revient à sa position initiale en entraînant les fibres et le profilé avec elle dans la direction de tirage.

Cependant, ces procédés présentent quelques défauts. Tout d'abord, pour chaque rayon de courbure d'un profilé avec une même section, il est nécessaire de réaliser un outillage complet s'étendant sur une grande longueur, et donc onéreux. Par ailleurs, dans le cas du document US 2015/0129116 A1, on constate que les fibres ont tendance à se concentrer du côté intérieur de la courbure du fait de la tension qu'elles subissent. Dès lors, la densité des fibres dans une section n'est plus homogène, en étant plus faible du côté extérieur que du côté intérieur de la courbure. La courbure ne peut être que faible car sinon, des bourrages apparaissent du fait de la répartition inégale des fibres.

Par ailleurs, tous ces procédés ne permettent d'obtenir que des profilés droits ou avec une courbure prédéterminée par l'outillage.

### OBJECTIFS DE L'INVENTION

Pour résoudre ces problèmes l'invention vise à fournir un procédé permettant de fabriquer une pièce composite profilée courbe avec de nombreuses possibilités de courbure avec le même outillage.

### DESCRIPTION DE L'INVENTION

Avec ces objectifs en vue, l'invention a pour objet un procédé de fabrication pour obtenir une pièce profilée en matériau composite, comprenant les étapes consistant à :
▷ préparer un matériau composite intermédiaire comprenant un matériau de renfort fibreux et une matrice;
▷ conférer au matériau intermédiaire une forme par durcissement de la matrice selon une section finale spécifique de la pièce profilée souhaitée;
le procédé étant caractérisé en ce qu'on réalise le durcissement du matériau intermédiaire dans une unité de calibrage (6), on maintient le matériau intermédiaire avant le passage dans l'unité de calibrage dans un état dans lequel la matrice est malléable, et on oriente la pièce profilée durcie en aval de l'unité de calibrage de manière à lui conférer une forme de courbure variable dans l'unité de calibrage pour qu'elle durcisse avec cette forme imposée.

L'invention permet de fabriquer des pièces profilées courbes de manière beaucoup plus variée que dans l'art antérieur. En effet, la partie de préparation du matériau composite intermédiaire est réalisée sans contrainte de courbure, la direction courbe n'étant conférée que dans l'unité de calibrage. La courbure est conférée au matériau composite intermédiaire encore suffisamment malléable puis figée par le durcissement de la matrice. La courbure conférée à la pièce n'est pas prédéterminée par la forme de l'outillage, comme dans l'art antérieur, mais par la manière dont on guide la pièce à sa sortie de l'outillage, ce qui donne des possibilités nouvelles pour appliquer ou non des courbures variables le long de la pièce. La pièce peut même comporter des portions droites de telle sorte qu'elle n'a que partiellement une forme courbe. La préparation sans courbure permet de conserver une répartition homogène du matériau fibreux qui est tiré dans l'axe de l'outillage en amont de l'unité de calibrage. L'unité de calibrage peut en effet être courte, de telle sorte que le décentrage du matériau fibreux par rapport à l'axe de l'outillage n'est pas sensible, dans la mesure où, immédiatement après avoir amorcé une trajectoire cintrée, la matière est figée rapidement avant que le désaxage de la traction sur les fibres ne deviennent gênant. De plus, puisqu'en amont de l'unité de calibrage, le matériau fibreux est tiré dans son axe, le niveau de frottement est fortement réduit de même que le risque de rupture de fibres.

Typiquement, le matériau de renfort est formé des fibres longues, telles que des mèches de fibres minérales, de fibres de verre, de fibres de basalte, de fibres organiques, de fibres d'aramide, de fibres de carbone, appelées également « rovings », de fibres métalliques ou de mélanges des fibres précitées. Le matériau de renfort est par exemple constitué du regroupement d'une multitude de mèches ou de fibres.

Selon une disposition constructive, on accompagne la courbure dans l'unité de calibrage avec un calibreur de section rigide constante s'étendant selon une trajectoire pour déterminer la surface extérieure de la pièce profilée par une surface de calibrage intérieure, la trajectoire étant apte à être cintrée en fonction de la forme courbe imposée. La section de la pièce profilée est ainsi maintenue pendant la phase de durcissement sans que la courbure ne soit entravée.

Alternativement, l'unité de calibrage est formée par les moyens de durcissement placés juste en aval de l'extrémité d'une filière. L'effet de courbure variable peut aussi être obtenu de cette manière, la phase de durcissement étant répartie entre l'amont et l'aval de l'extrémité de la filière. En effet, dans le cas d'un durcissement par refroidissement, le refroidissement est amorcé déjà dans la filière. Dans un durcissement par photopolymérisation, la diffusion du rayonnement peut remonter aussi légèrement à l'intérieur de la filière.

De manière similaire, on accompagne la courbure dans l'unité de calibrage avec noyau de section rigide constante s'étendant selon une trajectoire pour déterminer une surface intérieure de la pièce profilée par une surface de calibrage extérieure et former une pièce profilée tubulaire, la trajectoire étant apte à être cintrée en fonction de la forme courbe imposée. On réalise ainsi des pièces profilées tubulaires comportant des courbures avec la même facilité.

De manière avantageuse, le procédé de fabrication de pièce profilée est un procédé de pultrusion dans lequel le matériau de renfort est imprégné d'une résine réactive pour former après polymérisation le matériau composite, la pièce profilée étant tirée pour faire passer le matériau composite intermédiaire à travers l'unité de calibrage.

De manière particulière, on guide la pièce profilée à l'aide d'au moins une pince serrant la pièce profilée et en déplaçant ladite pince selon une trajectoire déterminant la géométrie de la pièce profilée. La pince peut exercer une traction sur la pièce profilée en même temps qu'elle la guide pour lui conférer sa courbure. Elle peut également reprendre la pièce en desserrant puis en resserrant celle-ci à une position plus proche de l'unité de calibrage. Lorsque plusieurs pinces sont utilisées, celles-ci exercent la traction de manière alternative, de telle sorte que l'extraction de la pièce profilée est réalisé en continu.

Selon une disposition avantageuse du procédé, on forme la pièce profilée selon une trajectoire cyclique, le cycle de la trajectoire étant symétrique selon un axe transversal à la pièce profilée. On peut ainsi former des pièces qui seront coupées par exemple au niveau de l'axe de symétrie et entre les cycles de manière à obtenir en continu des pièces courbées sans besoin de reprise. Deux pièces identiques sont produites par cycle, se trouvant produites en quelque sorte tête-bêche. Ce procédé est particulièrement avantageux lorsque le tirage est effectué par une unité de tirage placée dans l'axe de l'unité de calibrage et que la courbure est crée par la déviation de la pièce profilée entre l'unité de calibrage et l'unité de tirage.

Selon une disposition particulière, on procède à une polymérisation d'une résine réactive dans une unité de polymérisation en amont de l'unité de calibrage de manière à obtenir la matrice enrobant les fibres partiellement ou totalement polymérisée, pour former avec les fibres un matériau composite intermédiaire.

Selon une disposition avantageuse, pour préparer le matériau intermédiaire, on passe le matériau de renfort à travers une unité d'imprégnation selon une direction de tirage et on imprègne ledit matériau de renfort avec une résine réactive.

Selon un premier mode de réalisation, la matrice est une matière thermoplastique, le durcissement étant obtenu par refroidissement dans l'unité de calibrage. Le durcissement peut être obtenu très rapidement. Le refroidissement est obtenu par exemple en faisant circuler un liquide au niveau de l'unité de calibrage, dans des canaux ou directement par écoulement libre. Le liquide est par exemple de l'eau, mais tout liquide de refroidissement peut convenir.

Selon une disposition particulière, on procède à une polymérisation d'une résine dans une unité de polymérisation en amont de l'unité de calibrage de manière à obtenir la matrice enrobant les fibres partiellement ou totalement polymérisée, pour former avec les fibres un matériau composite intermédiaire. Bien que l'invention soit applicable à un matériau composite intermédiaire préalable enrobé, elle trouve une application pertinente dans la pultrusion réactive thermoplastique.

Selon un deuxième mode de réalisation, on prépare un matériau composite intermédiaire avec une résine photopolymérisable imprégnant le matériau de renfort, le durcissement étant obtenu par photopolymérisation de la résine dans l'unité de calibrage. La photopolymérisation est obtenue par le choix de la résine et l'adjonction d'un photoamorceur, de manière connue en soi, puis par une exposition intense aux rayons ultraviolet, lumineux ou infrarouge. La réaction obtenue doit être suffisamment rapide pour que le durcissement soit obtenu dans l'unité de calibrage.

Selon une disposition constructive, l'unité de calibrage comporte des fentes d'extension sensiblement circulaire pour le passage d'un rayonnement vers le matériau intermédiaire activant la photopolymérisation ou pour des moyens de refroidissement.

Selon une caractéristique avantageuse, dans le cas d'une matière thermoplastique, la température de la matrice ou de la résine en amont de l'unité de calibrage est telle que la matrice ou de la résine est toujours au moins malléable, voire liquide. La production d'une pièce profilée courbe induit que la longueur des fibres à l'extérieur de la courbe est plus longue que celles à l'intérieur. La vitesse de défilement des fibres n'est donc pas homogène. Il est donc important de laisser les fibres libres entre elles afin de ne pas contrarier leur glissement relatif en amont de l'unité de calibrage.

Ceci est atteint par exemple lorsque la température de la matrice ou de la résine en amont de l'unité de calibrage évolue selon un gradient dans la direction de tirage de telle sorte que la matrice ou la résine est toujours au moins malléable, voire liquide. Le gradient de température est réglé de telle sorte que, en fonction de l'avancement de la polymérisation dans l'unité de polymérisation, on garantit que la matrice ne se fige pas. Une alternative serait de maintenir l'ensemble de l'unité de polymérisation à une température au-dessus de la température de fusion de la matrice. L'utilisation d'un gradient permet de mieux contrôler la cinétique de la réaction de polymérisation.

Selon un perfectionnement, on passe le matériau composite intermédiaire par l'unité de calibrage avant la polymérisation complète de la matrice. On a constaté qu'il était possible de donner sa consistance à la pièce par le refroidissement avant même la fin complète de la polymérisation. L'avantage de procéder ainsi est de pouvoir raccourcir la longueur de l'outillage, ce qui diminue les frottements et donc l'effort de tirage. On diminue également le coût de l'outillage. Alternativement, pour une même longueur d'outillage, il est possible d'accélérer la vitesse de passage des fibres et donc d'obtenir une grande productivité.

Par exemple, la matrice est polymérisée à moins de 90% lors du passage dans l'unité de calibrage.

De manière complémentaire, on procède à une étape de post-cuisson dans laquelle la pièce profilée est montée en température pour obtenir la polymérisation complète de la matrice.

L'invention concerne également une installation de fabrication d'une pièce profilée en matériau composite, comportant :
▷ une unité de préparation pour préparer un matériau intermédiaire comprenant un matériau de renfort fibreux et une matrice;
▷ des moyens de durcissement pour durcir le matériau intermédiaire selon une section finale spécifique de la pièce profilée souhaitée;
l'installation étant caractérisé en ce qu'elle comporte une unité de calibrage comprenant les moyens de durcissement, l'installation comportant en outre des moyens de tirage pour orienter la pièce profilée en aval de l'unité de calibrage afin de lui conférer une forme de courbure variable dans l'unité de calibrage pour que la pièce profilée durcisse avec cette forme imposée.

Selon un mode de réalisation, les moyens de durcissement sont des moyens de refroidissement pour refroidir et durcir la matrice quand celle-ci est prévue dans une matière thermoplastique.

Selon un autre mode de réalisation, les moyens de durcissement sont des moyens d'irradiation pour polymériser la matrice quand celle-ci est prévue dans une matière polymérisable par photopolymérisation. Les moyens d'irradiation émettent par exemple un rayonnement infrarouge, lumineux ou ultraviolet, ou une combinaison de ces rayonnements.

De manière avantageuse, les moyens de calibrage comportent un calibreur de section rigide constante s'étendant selon une trajectoire, pour déterminer la surface extérieure de la pièce profilée par une surface de calibrage intérieure, la trajectoire étant apte à être cintrée en fonction de la forme courbe imposée. La rigidité de la section permet de conférer à la pièce profilée une section précise, en la maintenant pendant la phase de durcissement, tandis que la fibre neutre du calibreur peut s'orienter selon une direction variable.

De manière complémentaire, les moyens de calibrage comportent un noyau de section rigide constante s'étendant selon une trajectoire, pour déterminer la surface intérieure de la pièce profilée par une surface de calibrage extérieure et former une pièce tubulaire, la trajectoire étant apte à être cintrée en fonction de la forme courbe imposée. La rigidité de la section permet de conférer à la pièce profilée une forme tubulaire avec une section intérieure précise, en la maintenant pendant la phase de durcissement, tandis que la fibre neutre du noyau peut s'orienter selon une direction variable.

Selon un mode de réalisation, le calibreur,respectivement le noyau, a la forme d'un ressort en spirale comportant une base pour sa fixation placée côté amont. Ainsi, la base permet de recevoir le matériau composite intermédiaire selon une direction fixe, et lorsqu'une déviation est fournie à la pièce profilée, la forme en ressort fléchit dans le sens de la courbure imposée à la pièce, tout en maintenant une section sensiblement constante.

Selon un autre mode de réalisation, le calibreur, respectivement le noyau, est formé par un empilement de plaques rigides articulées entre elles et comportant la surface de calibrage intérieure, respectivement extérieure.

Selon une autre disposition constructive, les plaques sont reliées entre elles par des coussins d'élastomère.

Selon une autre disposition constructive, le calibreur, respectivement le noyau, a la forme d'un élément tubulaire supportant la surface de calibrage intérieure, respectivement extérieure, l'élément tubulaire comportant une rainure traversant la paroi tubulaire et s'étendant en spirale. La rainure sert à la fois de passage pour les moyens de durcissement, comme par exemple un liquide de refroidissement ou un rayonnement, et fournit de la souplesse à l'élément tubulaire.

Selon un perfectionnement, la rainure est une spirale à pas variable. Ainsi, la raideur de l'élément tubulaire est adaptée aux contraintes qu'il reçoit pour que la courbure soit régulière.

Selon un autre perfectionnement, l'épaisseur de la paroi de l'élément tubulaire est variable dans le sens axial. La raideur peut également être adaptée de cette manière, éventuellement en combinaison avec la caractéristique précédente.

Selon une disposition constructive, l'élément tubulaire s'étend sur une longueur de 5 à 200 mm, préférentiellement de 20 à 150 mm.

Selon une disposition constructive, les moyens de tirage comportent au moins une pince apte à saisir la pièce profilée et à se déplacer selon une trajectoire programmable. Chaque pince permet de saisir la pièce profilée et d'exercer la traction de la pièce profilée, en entraînant le matériau de renfort à travers l'outillage, tout en se déplaçant selon une trajectoire qui confère la courbure à la pièce profilée au niveau des moyens de calibrage. L'utilisation de deux pinces permet d'exercer la traction sans interruption, l'une effectuant le tirage pendant que l'autre reprend une position au plus proche des moyens de calibrage, et alternativement.

Selon un perfectionnement, la pince est manipulée par un robot. La pince peut ainsi être manoeuvrée selon de multiples degrés de liberté.

Selon une disposition constructive, la pince comporte un corps dans lequel est logé un anneau gonflable, l'anneau gonflable étant apte à serrer la pièce profilée pour la saisir lorsque l'anneau gonflable est gonflé.

Selon une autre disposition constructive, la pince comporte au moins deux corps apte à serrer la pièce profilée pour la saisir, les corps étant reliés entre eux successivement de manière rotulée.

Selon un mode de réalisation, les moyens de tirage comportent une unité de tirage linéaire pour exercer une traction et extraire la pièce profilée et en outre au moins un actionneur apte à dévier la pièce profilée entre la sortie des moyens de calibrage et l'unité de tirage. Les unités de tirage linéaires sont utilisées classiquement en pultrusion. Ces moyens peuvent être utilisés pour la fabrication de pièces globalement linéaires mais avec des variations locales, comme par exemple des ondulations, ces variations locales étant induites par l'actionneur.

L'invention a aussi pour objet un profilé composite, caractérisé en ce qu'il est fabriqué selon le procédé tel que défini précédemment et qu'il est utilisé pour former des pièces de véhicules routiers tel que des barres de toit, des pièces d'avions, de trains ou de tout autre moyen de transport, des profilés pour le bâtiment, des profilés pour manches d'outillage, des profilés d'échelle, des ressorts à lames, des profilés pour cheminement de câbles, des profilés pour le sport et les loisirs tels que des cross de hockey, des arcs ou bien encore tout autres profilés soumis à des sollicitations mécaniques.

### BRÈVE DESCRIPTION DES FIGURES

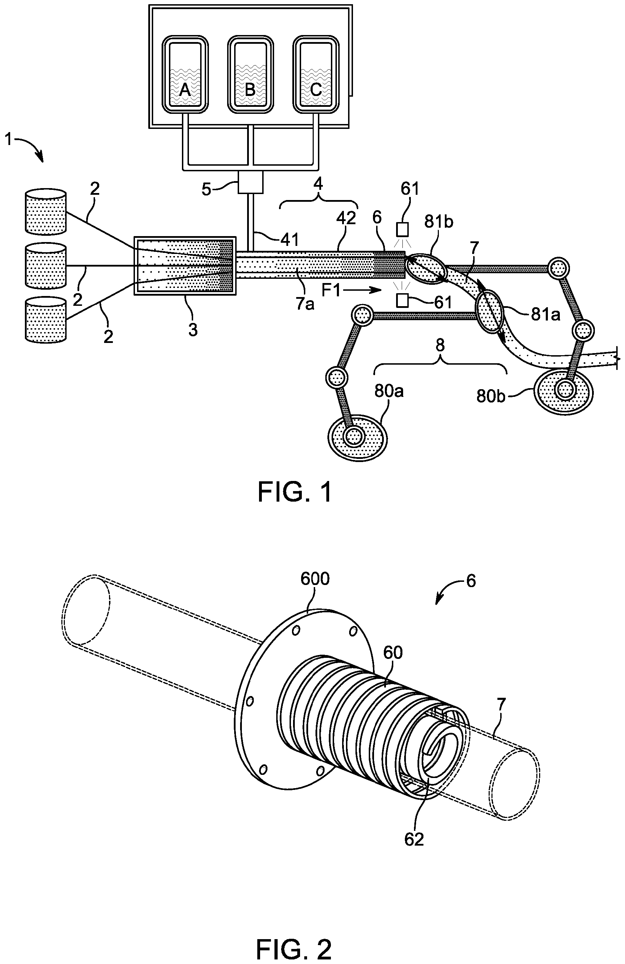

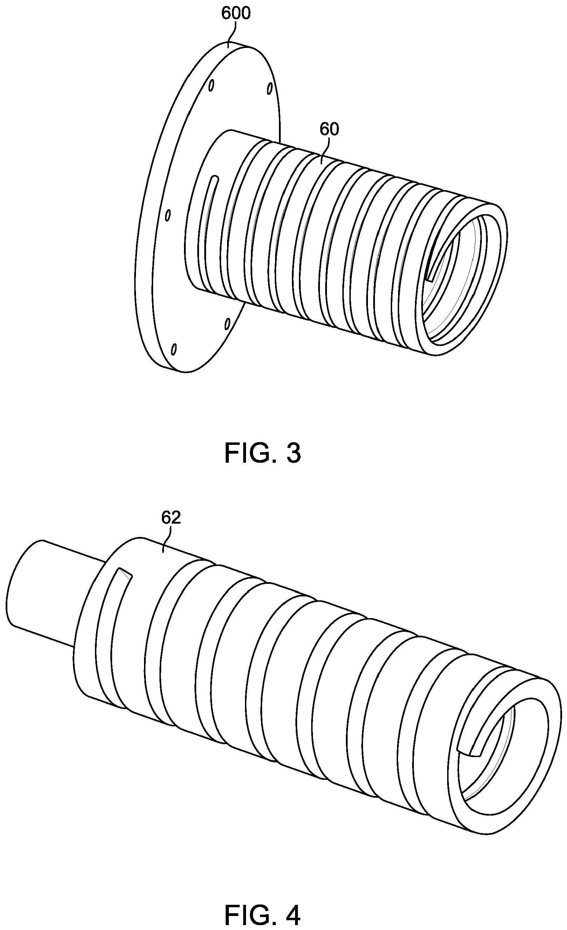

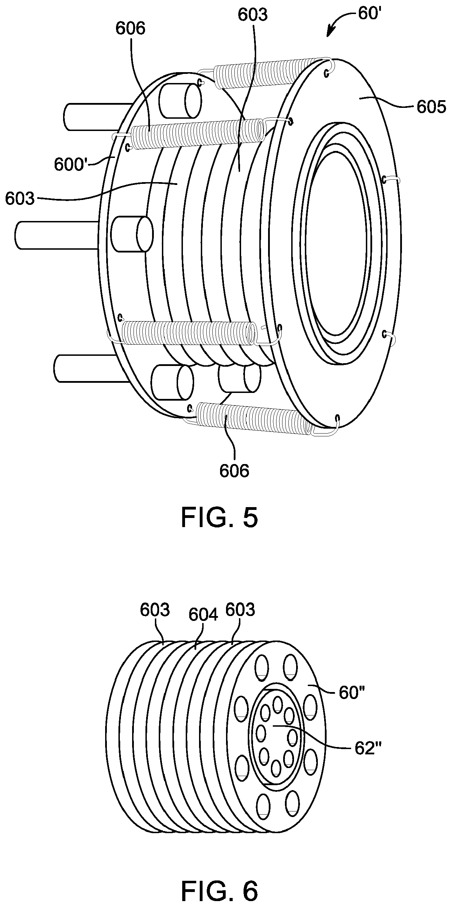

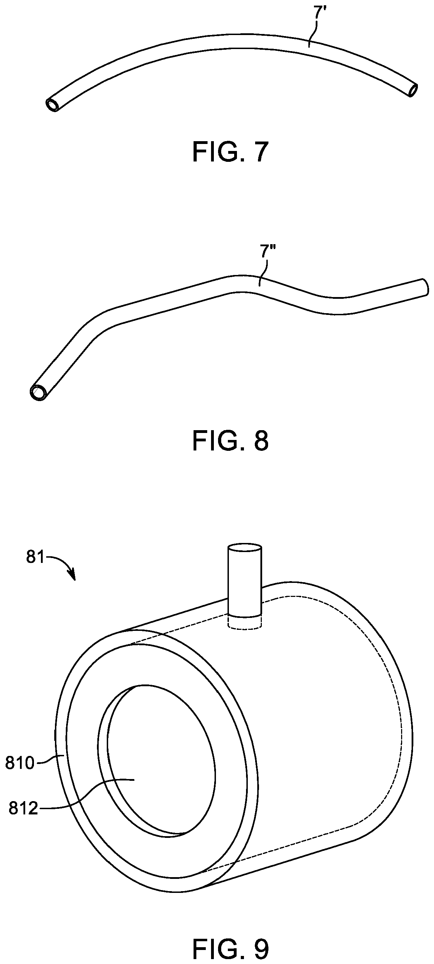

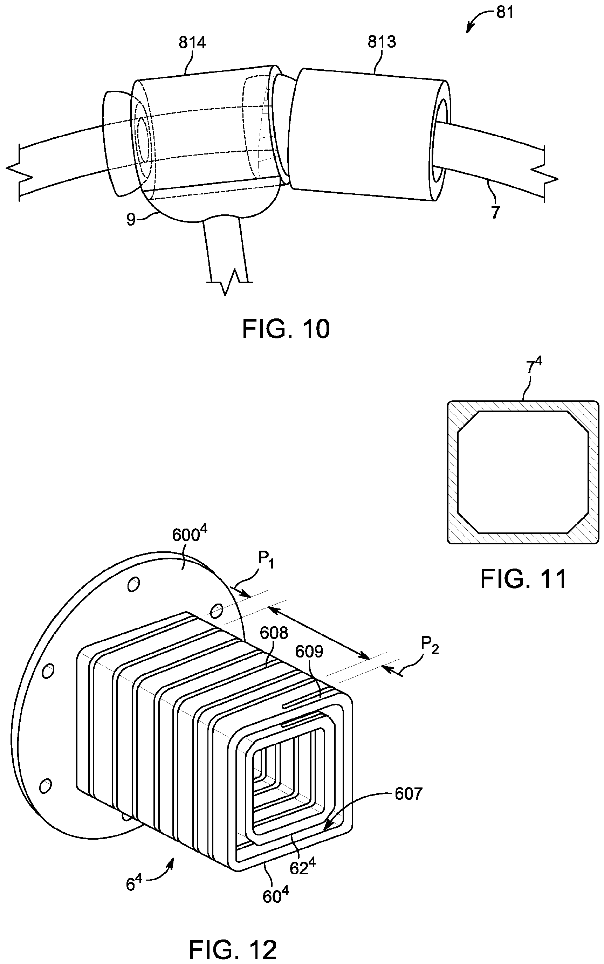

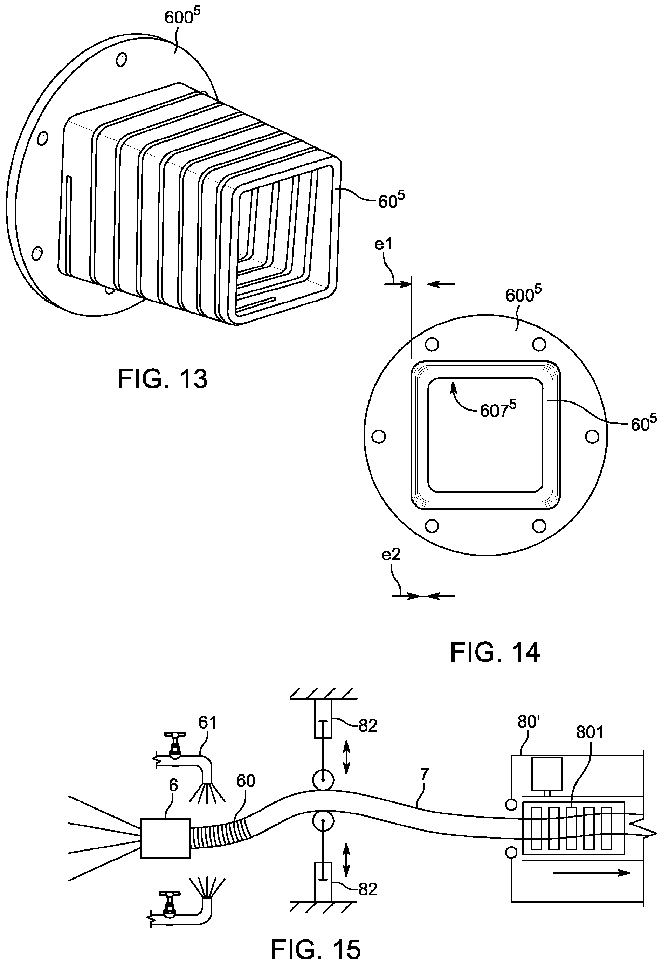

L'invention sera bien comprise, et d'autres caractéristiques et avantages de celle-ci apparaîtront, en référence aux dessins schématiques annexés, lesquels représentent, à titre d'exemple non limitatif, une forme de réalisation possible du dispositif concerné.
▷ La figure 1 est une vue schématique d'une installation selon un premier mode de réalisation de l'invention.
▷ La figure 2 est une vue en perspective d'un calibreur mis en oeuvre dans l'installation de la figure 1.
▷ Les figures 3 et 4 sont des vues de deux éléments du calibreur de la figure 2.
▷ La figure 5 est une vue en perspective d'un calibreur selon un deuxième mode de réalisation de l'invention.
▷ La figure 6 est une vue en perspective d'un calibreur selon un troisième mode de réalisation de l'invention.
▷ Les figures 7 et 8 sont des exemples de pièces réalisées avec le procédé selon l'invention.
▷ Les figures 9 et 10 sont des vues en perspective de pinces selon deux mode de réalisation distincts.
▷ La figure 11 est une vue de la section d'une pièce profilée réalisée avec le procédé selon l'invention.
▷ La figure 12 est une vue des moyens de calibrage selon un mode de réalisation pour la fabrication de la pièce profilée de la figure 11.
▷ La figure 13 est une vue en perspective d'un calibreur similaire à celui de la figure 12 selon un autre mode de réalisation.
▷ La figure 14 est une vue en bout du calibreur de la figure 13.

### DESCRIPTION DÉTAILLÉE

La figure 1 représente une installation de pultrusion conforme à un premier mode de réalisation de l'invention. Elle comprend successivement : une unité de dévidage 1 pour dévider des mèches 2 de fibres formant un matériau de renfort, une unité de préchauffage 3 des fibres qui permet d'amener les fibres issues de l'unité de dévidage 1 à une température proche de la température de fusion d'une résine; une filière 4 droite composée d'une unité d'imprégnation 41 pour imprégner les fibres avec une résine et d'une unité de polymérisation 42 ; une unité de mélange 5 pour mélanger des précurseurs et fournir la résine ainsi formée à l'unité d'imprégnation ; une unité de calibrage 6 comportant des moyens de durcissement 61 qui détermine la forme finale d'une pièce profilée 7 composite comprenant les fibres et la résine polymérisée; et des moyens de tirage 8 pour tirer la pièce profilée 7 hors de l'unité de calibrage 6, entraînant les fibres à travers l'installation depuis le dévidage des mèches 2.

Dans l'unité de mélange 5 de la résine, des précurseurs sont stockés sous forme liquide dans des réservoirs A, B, C. Les précurseurs sont conduits jusqu'à l'unité de mélange 5 selon un débit contrôlé, et mélangés pour former la résine liquide. La résine est injectée dans l'unité d'imprégnation 41 pour mouiller les fibres dans toute leur section et former un matériau composite intermédiaire 7a.

Dans l'unité de polymérisation 42, le matériau composite intermédiaire 7a est monté et maintenu en température. La résine réagit sous l'effet de la température et polymérise au moins partiellement pour former un polymère thermoplastique. Le gradient de température entre l'entrée et la sortie de l'unité de polymérisation 42 est tel que la résine au cours de sa transformation est toujours sous forme malléable ou liquide.

L'unité de calibrage 6 comporte un calibreur 60 qui s'étend dans le prolongement de l'unité de polymérisation 42. Ce passage impose la section au matériau intermédiaire 7a qui se fige dans cette forme sous l'effet des moyens de durcissement 61 qui imposent un refroidissement rapide à ce niveau. La pièce profilée 7 sort ainsi de la filière 4. L'unité de tirage 8 entraîne la pièce profilée 7 en exerçant sur elle une traction et en imposant au profilé une trajectoire que suit le calibreur 60. Une unité de découpe, non représentée, permet de couper la pièce profilée 7 à longueur. Après le débit des pièces profilées, celles-ci peuvent être stockées dans une enceinte dont la température est régulée, de sorte que la polymérisation pourra se poursuivre, si besoin.

Les moyens de tirage 8 comporte deux robots 80a, 80b aptes à manipuler deux pinces 81a, 81b. Les pinces 81a, 81b sont adaptées à la section de la pièce profilée 7 et sont aptes à la saisir sur commande. Dans l'exemple montré sur la figure 9, une pince 81 prévue pour une pièce de section circulaire comporte un corps 810 extérieur rigide et un anneau 812 gonflable logé à l'intérieur du corps 810. L'anneau 812 est destiné à être traversé par la pièce profilée 7 et à serrer la pièce lorsqu'il est mis sous pression interne, puis à la relâcher lorsqu'il n'est plus sous pression.

En fonctionnement, l'une des pinces 81a est serrée et le robot 80a qui la porte exerce une traction sur la pièce profilée 7 afin de faire passer le matériau de renfort à travers l'outillage, depuis le dévidage des mèches 2. L'autre robot 80b place la pince 81b pour prendre la relève de la première pince 81a, et exerce le pincement et la traction afin de libérer le premier robot 80a. La première pince 81a est relâchée et le premier robot 80a vient la placer sur la pièce profilée 7 dans une position plus en amont. Ce mouvement alternatif se répète tout au long de la production afin d'exercer le tirage sans discontinuité. Le tirage ne s'effectue pas nécessairement dans l'axe de l'unité de polymérisation, mais potentiellement de manière oblique et variable. Ceci permet de déplacer la pièce profilée 7 selon une trajectoire comprenant une courbure choisie et variable selon la programmation faite du déplacement des robots 80a, 80b, la courbure étant figée par le refroidissement imposé au niveau du calibreur 60.

Dans un autre exemple de pince 81', deux corps 813, 814 apte à serrer la pièce profilée 7 pour la saisir sont reliés entre eux de manière rotulée. Le premier des corps 814 est relié au bras 9 du robot. Une telle pince 81' permet un meilleur maintien par l'augmentation de la surface de contact tout en suivant la courbure variable de la pièce profilée. L'adaptation à la courbure de la pièce est garanti par l'articulation des pinces entre elles, de manière à minimiser les zones de contact rigides.

Un exemple de moyens de calibrage 6 est montré sur les figures 2 à 4. Ils comportent le calibreur 60, une base 600 fixée sur la filière 4 et supportant le calibreur 60, et un noyau 62. Le calibreur 60 a une forme de ressort et s'étend en direction de l'aval à partir de la base 600. Le noyau 62 a également une forme de ressort et est fixé à l'extrémité d'un mandrin, non représenté, s'étendant dans l'unité de polymérisation 42, de manière coaxiale au calibreur 60.

De tels moyens de calibrage 6 permettent de produire une pièce profilée de section tubulaire, comme montrée sur les figures 7 et 8. Lors des courbures imposées par l'unité de tirage 8, le calibreur 60 et le noyau 62 maintiennent constante la section de la pièce profilée 7 tout en accompagnant cette courbure, au gré des mouvements des pinces 81a, 81b. Le refroidissement est réalisé par exemple soit par des canaux internes aux noyau 62 et au calibreur 60, soit par la circulation d'un liquide de refroidissement entre les spires du calibreur 60. La pièce 7' de la figure 7 est une pièce tubulaire de courbure constante. La pièce profilée 7" de la figure 8 est une pièce tubulaire de même section, mais présentant des courbures variées. On pourrait également réaliser une pièce profilée rectiligne avec le procédé selon l'invention.

Un autre exemple de calibreur 60' est montré sur la figure 5. Celui-ci comporte un empilement de plaques 603 métalliques comportant une découpe à la section de la pièce profilée. Les plaques 603 sont arrangées entre elles pour garder un mouvement de pivotement relatif afin d'infléchir la direction du passage déterminé par les découpes. Le calibreur 60' comporte également un flasque avant 605 relié à la base 600' par une pluralité de ressorts de traction 606 uniformément répartis à la périphérie du flasque avant pour maintenir les plaques en empilement. Ce calibreur 60' permet de maintenir une section constante du matériau intermédiaire 7a pendant le refroidissement, tout en permettant la courbure par léger pivotement des plaques 603 entre elles.

Dans un troisième exemple, montré sur la figure 6, le calibreur 60" comporte un empilement de plaques 603, comme dans l'exemple précédent, et des coussins 604 d'élastomère interposés entre les plaques 603, complétés par un noyau 62" de même constitution, afin de produire une pièce profilée tubulaire, tout en permettant la courbure par léger pivotement des plaques 603 entre elles du fait de l'élasticité des coussins 604 d'élastomère.

Dans un quatrième exemple, montré sur les figures 11 et 12, la pièce profilée produite a une section sensiblement carrée, avec des angles arrondis. Les moyens de calibrage 6⁴ comportent le calibreur 60⁴, la base 600⁴ supportant le calibreur 60⁴, et le noyau 62⁴. Le calibreur 60⁴ a la forme d'un élément tubulaire de section carrée dont la surface intérieure de calibrage 607 correspond à la surface extérieure de la pièce profilée 7⁴. L'élément tubulaire est traversé par une rainure 608 s'étendant en spirale selon l'axe de l'élément tubulaire, le pas de la spirale étant variable en étant plus grand du côté de la base (P1) que du côté libre du calibreur (P2). La rainure 608 s'arrête avant l'extrémité libre de telle sorte qu'un anneau 609 complet y est préservé. Le noyau 62⁴ a la même constitution et s'étend de manière coaxiale au calibreur 60⁴.

Les figures 13 et 14 montrent un cinquième exemple du calibreur 60⁵ qui est une variante du quatrième exemple. En plus d'avoir un pas variable, l'épaisseur de la paroi de l'élément tubulaire est variable, en étant en diminution depuis la base 600⁵ (e1) vers l'extrémité libre (e2). La surface de calibrage intérieure 607⁵ reste pour autant de section constante.

En utilisation, les précurseurs sont par exemple du caprolactame, un activateur et un catalyseur qui sont maintenus à une température de 80 °C dans les réservoirs. Les fibres sont chauffées dans l'unité de préchauffage 3 à 80°C également. Dans l'unité d'imprégnation 41, la résine est injectée à un débit suffisant pour imprégner complètement les fibres, mais sans reflux. L'unité de polymérisation 42 est chauffée selon un gradient contrôlé jusqu'à la sortie au niveau de laquelle le matériau composite intermédiaire est à 240°C environ, soit 20K au-dessus de la température de fusion du polyamide-6. La résine polymérise tout au long de l'unité de polymérisation 42 et reste à l'état liquide, malléable ou fondu tout le long.

Dans un autre exemple, les précurseurs comprennent du polybutylène téréphtalate aromatique, respectivement du polyéthylène téréphtalate aromatique, afin de produire après polymérisation du polybutylène téréphtalate (PBT), respectivement du polyéthylène téréphtalate (PET).

Selon un deuxième mode de réalisation, illustré en figure 15, les moyens de tirage 8' comporte une unité de tirage 80' dite « Caterpillar », c'est-à-dire qu'elle comporte une paire de chenilles 801 enserrant la pièce profilée pour exercer une traction et extraire la pièce en entraînant le matériau intermédiaire. Les moyens de tirage 8' comportent en outre une paire d'actionneurs 82 aptes à dévier la pièce profilée entre la sortie des moyens de calibrage et l'unité de tirage 80', dans le plan des chenilles 801. Cette déviation entraîne une flexion de la pièce profilée 7 au niveau du calibreur 60 et des moyens de durcissement 61, de telle sorte que cette courbure imposée est figée par le durcissement. Cette déviation entraîne également une flexion élastique de la pièce profilée 7, en particulier entre les actionneurs 82 et l'unité de tirage 80'. Les ondulations de la pièce profilée passent dans le plan délimité entre les chenilles 801. L'amplitude de la courbure conférée à la pièce profilée est limitée, mais peut être suffisante dans bien des cas.

L'invention n'est pas limitée aux modes de réalisation qui ont été décrits uniquement à titre d'exemple. Le matériau de renfort pourrait être un textile dont les fibres s'entrecroisent.

## Revendications

1. Procédé de fabrication pour obtenir une pièce profilée (7) en matériau composite, comprenant les étapes consistant à :
▷ préparer un matériau composite intermédiaire (7a) comprenant un matériau de renfort fibreux et une matrice;
▷ conférer au matériau intermédiaire (7a) une forme par durcissement de la matrice selon une section finale spécifique de la pièce profilée (7) souhaitée;
le procédé étant **caractérisé en ce qu'**on réalise le durcissement du matériau intermédiaire (7a) dans une unité de calibrage (6), on maintient le matériau intermédiaire (7a) avant le passage dans l'unité de calibrage (6) dans un état dans lequel la matrice est malléable, et on oriente la pièce profilée (7) durcie en aval de l'unité de calibrage de manière à lui conférer une forme de courbure variable dans l'unité de calibrage (6) pour qu'elle durcisse avec cette forme imposée.

2. Procédé selon la revendication 1, selon lequel on accompagne la courbure dans l'unité de calibrage (6) avec un calibreur (60) de section rigide constante s'étendant selon une trajectoire pour déterminer la surface extérieure de la pièce profilée par une surface de calibrage intérieure, la trajectoire étant apte à être cintrée en fonction de la forme courbe imposée.

3. Procédé selon la revendication 1 ou 2, selon lequel on accompagne la courbure dans l'unité de calibrage (6) avec un noyau (62, 62") de section rigide constante s'étendant selon une trajectoire pour déterminer une surface intérieure de la pièce profilée (7) par une surface de calibrage extérieure et former une pièce profilée tubulaire, la trajectoire étant apte à être cintrée en fonction de la forme courbe imposée.

4. Procédé selon l'une des revendications 1 à 3, **caractérisé en ce qu'**il est un procédé de pultrusion dans lequel le matériau de renfort est imprégné d'une résine réactive pour former après polymérisation le matériau composite, la pièce profilée étant tirée pour faire passer le matériau composite intermédiaire (7a) à travers l'unité de calibrage (6).

5. Procédé selon l'une des revendications 1 à 4, selon lequel on guide la pièce profilée à l'aide d'au moins une pince (81a, 81b) serrant la pièce profilée et en déplaçant ladite pince (81a, 81b) selon une trajectoire déterminant la géométrie de la pièce profilée (7).

6. Procédé selon l'une des revendications 1 à 5, selon lequel on forme la pièce profilée selon une trajectoire cyclique, le cycle de la trajectoire étant symétrique selon un axe transversal à la pièce profilée.

7. Procédé selon la revendication 1 à 5, selon lequel la matrice est une matière thermoplastique, le durcissement étant obtenu par refroidissement dans l'unité de calibrage.

8. Procédé selon les revendications 4 et 7 prises en combinaison, selon lequel on procède à une polymérisation d'une résine réactive dans une unité de polymérisation (42) en amont de l'unité de calibrage (6) de manière à obtenir la matrice enrobant les fibres partiellement ou totalement polymérisée, pour former avec les fibres un matériau composite intermédiaire.

9. Procédé selon l'une des revendications 1 à 8, selon lequel, pour préparer le matériau intermédiaire, on passe le matériau de renfort à travers une unité d'imprégnation (41) selon une direction de tirage (F1) et on imprègne ledit matériau de renfort avec une résine réactive.

10. Procédé selon la revendication 9, selon lequel on prépare un matériau composite intermédiaire avec une résine photopolymérisable imprégnant le matériau de renfort, le durcissement de la résine étant obtenu par photopolymérisation dans l'unité de calibrage.

11. Procédé selon l'une des revendications 7 à 10, selon lequel l'unité de calibrage comporte des fentes d'extension sensiblement circulaire pour le passage d'un rayonnement vers le matériau intermédiaire (7a) activant la photopolymérisation ou pour des moyens de refroidissement.

12. Procédé selon les revendications 7 et 9 prises en combinaison, selon lequel la température de la matrice ou de la résine en amont de l'unité de calibrage est telle que la matrice ou la résine est toujours au moins malléable, voire liquide.

13. Procédé selon la revendication 12, selon lequel la température de la matrice ou de la résine en amont de l'unité de calibrage évolue selon un gradient dans la direction de tirage (F1) de telle sorte que la matrice ou la résine est toujours au moins malléable, voire liquide.

14. Installation de fabrication d'une pièce profilée (7) en matériau composite comportant :
▷ une unité de préparation pour préparer un matériau intermédiaire comprenant un matériau de renfort fibreux et une matrice;
▷ des moyens de durcissement (61) pour y durcir le matériau intermédiaire selon une section finale spécifique de la pièce profilée souhaitée ;
l'installation étant **caractérisée en ce qu'**elle comporte une unité de calibrage (6) comprenant les moyens de durcissement, l'installation comportant en outre des moyens de tirage (8) pour orienter la pièce profilée (7) en aval de l'unité de calibrage (6) afin de lui conférer une forme de courbure variable dans l'unité de calibrage (6) pour que la pièce profilée (7) durcisse avec cette forme imposée.

15. Installation selon la revendication 14, dans laquelle les moyens de durcissement sont des moyens de refroidissement pour refroidir et durcir la matrice quand celle-ci est prévue dans une matière thermoplastique.

16. Installation selon la revendication 14, dans laquelle les moyens de durcissement sont des moyens d'irradiation pour polymériser la matrice quand celle-ci est prévue dans une matière polymérisable par photopolymérisation.

17. Installation selon l'une des revendications 14 à 16, dans laquelle les moyens de calibrage comportent un calibreur (60) de section rigide constante s'étendant selon une trajectoire pour déterminer la surface extérieure de la pièce profilée par une surface de calibrage intérieure, la trajectoire étant apte à être cintrée en fonction de la forme courbe imposée.

18. Installation selon l'une des revendications 14 à 17, dans laquelle les moyens de calibrage comportent un noyau (62, 62") de section rigide constante s'étendant selon une trajectoire pour déterminer la surface intérieure de la pièce profilée (7) par une surface de calibrage extérieure et former une pièce tubulaire, la trajectoire étant apte à être cintrée en fonction de la forme courbe imposée.

19. Installation selon la revendication 17 ou 18, dans laquelle le calibreur (60), respectivement le noyau (62), a la forme d'un ressort (601) en spirale comportant une base (600) pour sa fixation placée côté amont.

20. Installation selon la revendication 17 ou 18, dans laquelle le calibreur (60'), respectivement le noyau (62"), est formé par un empilement de plaques (603) rigides articulées entre elles et comportant la surface de calibrage intérieure, respectivement extérieure.

21. Installation selon la revendication 20, dans laquelle les plaques (603) sont reliées entre elles par des coussins (604) d'élastomère.

22. Installation selon la revendication 17 ou 18, dans laquelle le calibreur (60⁴), respectivement le noyau (62⁴), a la forme d'un élément tubulaire supportant la surface de calibrage intérieure (607), respectivement extérieure, l'élément tubulaire comportant une rainure (608) traversant la paroi tubulaire et s'étendant en spirale.

23. Installation selon la revendication 22, dans laquelle la rainure (608) est une spirale à pas variable.

24. Installation selon la revendication 22 ou 23, dans laquelle l'épaisseur de la paroi de l'élément tubulaire est variable dans le sens axial.

25. Installation selon l'une des revendications 22 à 24, dans laquelle l'élément tubulaire s'étend sur une longueur de 5 à 200 mm, préférentiellement de 20 à 150 mm.

26. Installation selon l'une des revendications 14 à 25, dans laquelle les moyens de tirage (8) comportent au moins une pince (81a, 81b) apte à saisir la pièce profilée (7) et à se déplacer selon une trajectoire programmable.

27. Installation selon la revendication 26, dans laquelle la pince (81a, 81b) est manipulée par un robot.

28. Installation selon l'une des revendications 26 ou 27, dans laquelle la pince (81) comporte un corps (810) dans lequel est logé un anneau gonflable (812), l'anneau gonflable (812) étant apte à serrer la pièce profilée (7) pour la saisir lorsque l'anneau gonflable (812) est gonflé.

29. Installation selon l'une des revendications 26 à 28, dans laquelle la pince (81') comporte au moins deux corps (813, 814) apte à serrer la pièce profilée (7) pour la saisir, les corps (813, 814) étant reliés entre eux successivement de manière rotulée.

30. Installation selon l'une des revendications 14 à 25, dans laquelle les moyens de tirage (8') comportent une unité de tirage (80') linéaire pour exercer une traction et extraire la pièce profilée et en outre au moins un actionneur (82) apte à dévier la pièce profilée entre la sortie des moyens de calibrage et l'unité de tirage (80').

31. Profilé composite, **caractérisé en ce qu'**il est fabriqué selon le procédé de l'une des revendications 1 à 13 et qu'il est utilisé pour former des pièces de véhicules routiers tel que des barres de toit, des pièces d'avions, de trains ou de tout autre moyen de transport, des profilés pour le bâtiment, des profilés pour manches d'outillage, des profilés d'échelle, des ressorts à lames, des profilés pour cheminement de câbles, des profilés pour le sport et les loisirs tels que des cross de hockey, des arcs ou bien encore tout autres profilés soumis à des sollicitations mécaniques.
